# EUROPÄISCHE PATENTSCHRIFT

(11) **EP 2 727 742 B1**
(45) Veröffentlichungstag und Bekanntmachung des Hinweises auf die Patenterteilung: **27.07.2016**
(21) Anmeldenummer: 13005217.8
(22) Anmeldetag: 05.11.2013
(51) Int. Cl.: G02B 3/00, B42D 25/29, B42D 25/355, B42D 25/00

(54) **SICHERHEITSELEMENT MIT LINSENRASTERBILD**
SECURITY ELEMENT WITH LENTICULAR IMAGE
ELÉMENT DE SÉCURITÉ AVEC IMAGE LENTICULAIRE

(30) Priorität: 06.11.2012 DE 102012021724
(43) Veröffentlichungstag der Anmeldung: 07.05.2014
(73) Patentinhaber: Giesecke & Devrient GmbH, 81677 München (DE)
(72) Erfinder: Rahm, Michael, 83646 Bad Tölz (DE); Fuhse, Christian, 83624 Otterfing (DE); Kaule, Wittich, 82275 Emmering (DE)

(56) Entgegenhaltungen:
- EP-A2- 0 219 012
- DE-A1-102006 029 536
- DE-A1-102009 006 301
- DE-U1-202004 021 714
- US-A1- 2005 150 964

## Beschreibung

Die Erfindung betrifft ein Sicherheitselement zur Absicherung von Sicherheitspapieren, Wertdokumenten und anderen Datenträgern, mit einem Linsenrasterbild zur unskalierten Darstellung von zwei oder mehr vorbestimmten Sollbildern. Die Erfindung betrifft auch ein Verfahren zum Herstellen eines derartigen Sicherheitselements, sowie einen mit einem solchen Sicherheitselement ausgestatteten Datenträger.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen.

Eine besondere Rolle bei der Echtheitsabsicherung spielen Sicherheitselemente mit betrachtungswinkelabhängigen Effekten, da diese selbst mit modernsten Kopiergeräten nicht reproduziert werden können. Die Sicherheitselemente werden dabei mit optisch variablen Elementen ausgestattet, die dem Betrachter unter unterschiedlichen Betrachtungswinkeln einen unterschiedlichen Bildeindruck vermitteln und beispielsweise je nach Betrachtungswinkel einen anderen Farb- oder Helligkeitseindruck und/ oder ein anderes graphisches Motiv zeigen.

In diesem Zusammenhang ist es bekannt, Datenträger, beispielsweise Ausweiskarten, zur Absicherung mit lasergravierten Kippbildern zu versehen. Dabei werden zwei oder mehr verschiedene Kennzeichnungen, beispielsweise eine Seriennummer und ein Ablaufdatum, unter unterschiedlichen Winkeln durch eine Anordnung zylindrischer Linsen in die Karte lasergraviert. Die Laserstrahlung erzeugt dabei eine lokale Schwärzung des Kartenkörpers, die die eingravierten Kennzeichnungen visuell sichtbar macht. Bei der Betrachtung ist je nach Blickwinkel nur die jeweils aus dieser Richtung eingravierte Kennzeichnung sichtbar, so dass durch eine Verkippung der Karte senkrecht zur Achse der Zylinderlinsen ein optisch variabler Kippeffekt entsteht.

Die Druckschrift EP 0 219 012 A1 beschreibt eine Ausweiskarte mit einer partiellen Linsenrasterstruktur. Durch diese Linsenstruktur werden mit einem Laser unter verschiedenen Winkeln Informationen in die Karte eingeschrieben. Diese Informationen können anschließend auch nur unter diesem Winkel erkannt werden, so dass beim Kippen der Karte die unterschiedlichen Informationen erscheinen.

In der Druckschrift DE 10 2009 006 301 A1 ist ein optisch variables Sicherheitselement zur Absicherung von Datenträgern beschrieben, in das durch Einwirkung von Laserstrahlung visuell erkennbare Kennzeichnungen eingebracht sind. Das Sicherheitselement enthält hierzu eine optisch variable Aufzeichnungsschicht, die mit einem Oberflächenrelief in Form eines Linsenrasters versehen ist. Die Kennzeichnungen sind mit Laserstrahlung aus unterschiedlichen Richtungen durch das Linsenraster hindurch in die optisch variable Aufzeichnungsschicht eingebracht und sind bei der Betrachtung jeweils aus denselben Richtungen erkennbar.

Ausgehend davon liegt der Erfindung die Aufgabe zugrunde, ein Sicherheitselement der eingangs genannten Art anzugeben, das hohe Fälschungssicherheit mit einem attraktiven visuellen Erscheinungsbild und großer Gestaltungsfreiheit für den Designer verbindet.

Diese Aufgabe wird durch die Merkmale der unabhängigen Ansprüche gelöst. Weiterbildungen der Erfindung sind Gegenstand der Unteransprüche.

Gemäß der Erfindung ist bei einem Sicherheitselement der eingangs genannten Art vorgesehen, dass
- das Linsenrasterbild ein Linsenraster und ein von dem Linsenraster beabstandet angeordnetes Motivbild enthält, das bei Betrachtung mit dem Linsenraster die vorbestimmten Sollbilder zeigt, wobei
- das Linsenraster aus einer Mehrzahl von nicht-zylindrischen Mikrolinsen gebildet ist, die in einem Raster mit der Symmetrie eines Parallelogrammgitters angeordnet sind,
- das Motivbild aus einer Mehrzahl von Elementarzellen gebildet ist, welche im Parallelogramm-Raster des Linsenrasters zueinander versetzt angeordnet sind, wobei
- jede der Elementarzellen in zwei oder mehr Teilflächen zerlegt ist, jede dieser Teilflächen genau einem der Sollbilder zugeordnet ist und jeweils einen unskalierten Ausschnitt des Sollbilds enthält, dem die Teilfläche zugeordnet ist, und wobei
- die relative Lage der Mikrolinsen und der Teilflächen der Elementarzellen jeweils einen Betrachtungswinkelbereich festlegen, aus dem das Sollbild, dem die Teilfläche zugeordnet ist, bei der Betrachtung unskaliert gezeigt ist.

Seit einiger Zeit werden sogenannte Moire-Vergrößerungsanordnungen und andere mikrooptische Darstellungsanordnungen als Sicherheitsmerkmale eingesetzt. Die prinzipielle Funktionsweise von Moiré-Vergrößerungsanordnungen ist in dem Artikel "The moire magnifier", M.C. Hutley, R. Hunt, R.F. Stevens and P. Savander, Pure Appl. Opt. 3 (1994), pp. 133-142, beschrieben. Kurz gesagt bezeichnet Moire-Vergrößerung danach ein Phänomen, das bei der Betrachtung eines Rasters aus identischen Bildobjekten durch ein Linsenraster mit annähernd demselben Rastermaß auftritt. Wie bei jedem Paar ähnlicher Raster ergibt sich dabei ein Moirémuster, das aus einer periodischen Anordnung vergrößerter und gegebenenfalls gedrehter Bilder der Elemente des Bildrasters besteht.

Bei mikrooptischen Darstellungsanordnungen werden üblicherweise sowohl das Raster der Bildobjekte als auch das Linsenraster durch UV-Prägungen auf gegenüberliegenden Seiten einer Trägerfolie hergestellt. Die Dicke der Trägerfolie ist dabei so bemessen, dass sich die Bildobjekte unter Berücksichtigung der beiden Restlackdicken genau in der Fokusebene der Linsen befinden. Das Moiré-vergrößerte Bild wird allerdings unscharf, wenn die Position der Bildobjekte zu weit von der Fokusebene abweicht. Für Anwendungen bei Banknoten oder anderen Wertdokumenten erfordert dies eine hohe Genauigkeit von nur wenigen Mikrometern.

Die erfindungsgemäßen Linsenrasterbilder sind dagegen auf eine unskalierte Darstellung von Sollbildern gerichtet, also auf eine Darstellung, die weder vergrößert noch verkleinert ist. Sie haben sich gegenüber Abweichungen der Motivbildebene von der Fokusebene als wesentlich robuster herausgestellt als vergrößernde Systeme. Weicht die Lage der Motivbildebene nämlich von der Fokusebene ab, so vergrößern sich bei unskaliert darstellenden Systemen lediglich die Winkelbereiche, in denen Übergänge zwischen verschiedenen Sollbildern stattfinden auf Kosten der Winkelbereiche, in denen jeweils nur ein Sollbild sichtbar ist. Die für das visuelle Erscheinungsbild wesentlich bedeutsamere Schärfe der Sollbilder wird dagegen von der Abweichung nicht beeinträchtigt. Dieser Effekt kann auch gezielt dazu genutzt werden, um die Dicke der Trägerfolie und damit die Gesamtdicke des Sicherheitselements weiter zu reduzieren.

Die dargestellten Sollbilder sind jeweils aus einem gewissen Betrachtungswinkelbereich um eine zentrale Betrachtungsrichtung herum sichtbar, wobei die Größe dieses Sichtbarkeitsbereichs insbesondere durch die Größe der Teilflächen gegeben ist. Abkürzend wird im Rahmen dieser Beschreibung manchmal von einer Betrachtungsrichtung gesprochen, wobei sich versteht, dass diese Angabe den durch die endliche Größe der Teilflächen bestimmten Sichtbarkeitsbereich um diese Betrachtungsrichtung herum mit einschließt.

Im Rahmen der Erfindung weisen die Elementarzellen des Motivbilds alle dieselbe Umrissform auf und sind in dieselbe Anzahl von Teilflächen zerlegt. Wie weiter unten genauer erläutert, sind die Elementarzellen in manchen Gestaltungen alle in derselben Weise in Teilflächen zerlegt, während in anderen Gestaltungen die Zerlegung bereichsweise unterschiedlich ist oder sogar kontinuierlich variiert. Nicht identisch ist in der Regel der von den Teilflächen gezeigte Bildinhalt, da dieser jeweils einen Ausschnitt eines der darzustellenden Sollbilder enthält und somit vom Bildinhalt der Sollbilder bestimmt wird.

Die Elementarzellen können in nur zwei Teilflächen zerlegt sein, bevorzugt sind jedoch Zerlegungen in drei oder mehr Teilflächen. In einer bevorzugten Ausgestaltung der Erfindung ist jede der Elementarzellen in drei oder mehr, nicht auf einer Geraden liegende Teilflächen zerlegt. Da die Teilflächen nicht auf einer Geraden liegen, kann das Linsenrasterbild in mehr als einer Kipprichtung einen Bildwechsel zwischen den dargestellten Sollbildern zeigen. Insbesondere zeigt das Linsenrasterbild einen Bildwechsel in mehr als einer Kipprichtung, wenn nicht auf einer Geraden liegende Teilflächen verschiedenen Sollbildern zugeordnet sind. In einer besonders bevorzugten Variante ist jede der Elementarzellen in n x m rasterförmig angeordnete Teilflächen zerlegt, wobei n und m ganze Zahlen größer gleich 2 sind.

Die Anzahl s der Sollbilder, deren Darstellung das Linsenrasterbild dient, kann der Anzahl t der Teilflächen entsprechen, in die jede der Elementarzellen zerlegt ist. In diesem Fall ist jede Teilfläche genau einem Sollbild zugeordnet. Diese Variante ist insbesondere für Linsenrasterbilder von Vorteil, die eine größere Zahl, insbesondere 5 oder mehr Sollbilder zeigen sollen, wie etwa Bewegungsbilder, Morphbilder (auch: Morphingbilder) oder Stereobilder.

In anderen Gestaltungen ist dagegen die Anzahl s der Sollbilder, deren Darstellung das Linsenrasterbild dient, mit Vorteil kleiner als die Anzahl t der Teilflächen, in die jede der Elementarzellen zerlegt ist. Zumindest einem Sollbild sind dann mehrere Teilflächen zugeordnet, so dass dasselbe Sollbild aus unterschiedlichen Betrachtungswinkeln sichtbar ist. Vorzugsweise ist t dabei eine zusammengesetzte Zahl und s ist ein echter Teiler von t, so dass jedem Sollbild dieselbe Anzahl t/s an Teilflächen zugeordnet werden kann.

Beispielsweise kann das Linsenrasterbild für die Darstellung von s = 2 Sollbildern ausgelegt sein und jede der Elementarzellen kann in t = 4 Teilflächen zerlegt sein. Da s ein echter Teiler von t ist, können jedem Sollbild t/s = 2 Teilflächen zugeordnet werden, so dass jedes Sollbild aus zwei Betrachtungswinkelbereichen sichtbar ist. Mit Vorteil sind die Elementarzellen dabei rasterförmig in Form eines 2x2-Rasters in die 4 Teilflächen zerlegt, wobei jedem Sollbild zwei diagonal gegenüberliegende Teilflächen zugeordnet sind. Dadurch kann ein Bildwechsel zwischen den beiden Sollbildern in jeder der Rasterrichtungen erzielt werden.

Nach einem weiteren Beispiel kann das Linsenrasterbild für die Darstellung von s = 4 Sollbildern ausgelegt sein und jede der Elementarzellen kann in t = 16 Teilflächen zerlegt sein. Da s ein echter Teiler von t ist, können jedem Sollbild t/ s = 4 Teilflächen zugeordnet werden, so dass jedes Sollbild aus vier Betrachtungswinkelbereichen sichtbar ist. Durch geeignete Anordnung der Teilflächen und geeignete Zuordnung zu den Sollbildern kann sichergestellt werden, dass in mehr als einer Kipprichtung ein Bildwechsel zwischen den Sollbildern stattfindet.

In vorteilhaften Ausgestaltungen sind die Elementarzellen alle in gleicher Weise in Teilflächen zerlegt, so dass die einander entsprechenden Teilflächen der Mehrzahl von Elementarzellen alle dieselbe Form und Größe aufweisen. In anderen, ebenfalls vorteilhaften Ausgestaltungen sind die Elementarzellen jeweils bereichsweise in gleicher Weise in Teilflächen zerlegt, d.h. die einander entsprechenden Teilflächen der Mehrzahl von Elementarzellen weisen jeweils innerhalb eines Teilbereichs alle dieselbe Form und Größe auf, während sich die einander entsprechenden Teilflächen in unterschiedlichen Teilbereichen in Form und/ oder Größe unterscheiden.

Bei einer weiteren, ebenfalls vorteilhaften Ausgestaltung ändert sich die Zerlegung der Elementarzellen in Teilflächen zumindest in Teilbereichen des Motivbilds kontinuierlich, d.h., Form und/oder Größe der einander entsprechenden Teilflächen ändern sich von einer Elementarzelle zur nächsten. Eine kontinuierliche Änderung bedeutet dabei, dass lokal, also zwischen benachbarten Elementarzellen nur kleine Unterschiede bestehen, die sich aber über viele Elementarzellen hinweg zu einem gewünschten globalen Änderungsverlauf addieren. Vorzugsweise ändert sich dabei die Fläche einander entsprechender Teilflächen von einer Elementarzelle zu nächsten um weniger als 5%, insbesondere um weniger als 1% der Maximalgröße der Teilfläche in der Elementarzelle. Bei einer Formänderung ändert sich jede Abmessung (Höhe, Breite, Diagonale etc.) einander entsprechender Teilflächen von einer Elementarzelle zu nächsten um weniger als 5%, insbesondere um weniger als 1%. Dadurch ist sichergestellt, dass sich benachbarte Elementarzellen in ihrer Zerlegung nur wenig unterscheiden, so dass keine Sprünge in der Darstellung der Sollbilder auftreten. Dennoch können über größere Abstände auf dem Sicherheitselement unterschiedlich große oder unterschiedlich geformte Sichtbarkeitsbereiche erzielt werden.

Die Elementarzellen können geradlinig begrenzt sein oder mit krummlinigen Begrenzungslinien ausgebildet sein. Die Form der Elementarzellen ist nicht beschränkt, sie können insbesondere parallelogrammförmig, rechteckig oder in anderer Weise polygonal begrenzt sein. Die Fläche F der Elementarzellen liegt vorzugsweise zwischen 25 µm² und 10.000 µm². Dabei entspricht die Fläche F vorteilhaft der Fläche der Einheits-Gitterzelle des Parallelogramm-Linsenrasters. Im Allgemeinen kann die Fläche F der Elementarzellen aber auch kleiner als die Fläche der Einheits-Gitterzelle des Parallelogramm-Linsenrasters sein, so dass sich Betrachtungsrichtungen ergeben, aus denen keines der Sollbilder sichtbar ist.

Das Parallelogramm-Raster weist eine schiefwinklige Einheits-Gitterzelle mit ungleichlangen Seiten s₁ und s₂ und einem Zwischenwinkel σ auf. Die Seitenlängen s₁ und s₂ der Einheits-Gitterzelle liegen vorzugsweise jeweils zwischen 3 µm und 50 µm, insbesondere zwischen 5 µm und 30 µm. Mit Vorteil ist das Verhältnis der längeren zur kürzeren Seitenlänge größer als 1,03, insbesondere größer als 1,1. Der Zwischenwinkel der Seiten des Parallelogramm-Rasters liegt vorzugsweise zwischen 65° und 85°.

Das Linsenrasterbild kann insbesondere ein Wechselbild, ein Bewegungsbild, ein Pumpbild, ein Morphbild oder ein Stereobild sein. Dabei bezeichnet ein Wechselbild ein Bild, das unter unterschiedlichen Betrachtungswinkeln unterschiedliche Bilder zeigt, so dass der Bildeindruck für den Betrachter zwischen zwei oder mehrere Bildern wechselt. Ein Bewegungsbild ist ein Bild, das unter unterschiedlichen Betrachtungswinkeln ein Bildmotiv in unterschiedlichen Bewegungszuständen zeigt, so dass für den Betrachter beim Kippen scheinbar eine Bewegung abläuft. Ein Pumpbild ist ein Bild, das unter unterschiedlichen Betrachtungswinkeln ein sich vergrößerndes oder verkleinerndes Bildmotiv zeigt, so dass für den Betrachter beim Kippen der Eindruck eines sich in der Größe verändernden Bildmotivs entsteht. Ein Morphbild ist ein Bild, bei dem sich beim Kippen ein Startbild über eine definierte Anzahl von Zwischenstadien in ein Endbild verwandelt. Schließlich ist ein Stereobild ein Bild, das zumindest zwei Ansichten eines Bildmotivs aus unterschiedlichen Betrachtungsrichtungen zeigt. Die Betrachtungswinkel der Ansichten werden auf Grundlage eines vorgewählten Betrachtungsabstands für das Linsenrasterbild so gewählt, dass für den Betrachter ein Stereobild des Bildmotivs entsteht.

Die nicht-zylindrischen Mikrolinsen können insbesondere durch sphärische Linsen, asphärische Linsen, astigmatische Linsen, GRIN-Linsen (Gradient Refraction Index), diffraktive Linsen, holographische Linsen, Fresnellinsen, Multizonen-Linsen oder andere Elemente mit fokussierender Wirkung gebildet sein. Sie weisen vorzugsweise einen Durchmesser bzw. bei nichtsphärischen Gestaltungen eine größte Abmessung zwischen 5 µm und 50 µm auf.

Die in den Teilflächen der Elementarzellen enthaltenen Ausschnitte können auf beliebige Art gebildet sein, vorzugsweise durch geprägte Strukturen mit Erhebungen und/ oder Vertiefungen, die insbesondere auch farbgefüllt oder eingefärbt sein können, durch gedruckte Strukturen, durch transferierte Strukturen, durch metallische oder nicht-metallische Strukturen, durch optisch variable Farben, insbesondere auf Basis optisch variabler Pigmente, durch Interferenzschichten, durch Beugungsstrukturen, durch Subwellenlängenstrukturen, durch Mottenaugenstrukturen oder durch Kombinationen daraus.

Die Bildwirkung der Ausschnitte in den Teilflächen kann dabei eine Farbwirkung oder auch eine reine Hell/ Dunkel-Kontrastwirkung sein. Farbwirkungen schließen dabei auch optisch variable konstante Farbwirkungen mit einem mit dem Betrachtungswinkel variierenden Farb- oder Helligkeitseindruck ein, sowie metallisch reflektierende Farbgestaltungen. So kann beispielsweise vorgesehen sein, dass die Ausschnitte eines Sollbilds mit einer optisch variablen Farbe erzeugt werden, so dass das Sollbild aus mehreren unterschiedlichen Betrachtungsrichtungen zwar jeweils dasselbe Motiv, jedoch mit unterschiedlichem Farbeindruck zeigt. Auch die metallische Reflexion einer metallischen Struktur wird in diesem Zusammenhang als Farbwirkung angesehen, wobei das Erscheinungsbild je nach dem eingesetzten Metall oder der eingesetzten Legierung beispielsweise silbrig-glänzend oder auch gold-, kupfer-, bronze- oder messingfarben sein kann. Es versteht sich, dass auch Kombinationen der genannten Farbwirkungen bzw. Hell/Dunkel-Kontrastwirkungen vorgesehen sein können.

Das Sicherheitselement ist mit Vorteil ein Sicherheitsfaden, ein Aufreißfaden, ein Sicherheitsband, ein Sicherheitsstreifen, ein Patch oder ein Etikett zum Aufbringen auf ein Sicherheitspapier, Wertdokument oder dergleichen.

Die Erfindung enthält auch einen Datenträger, der mit einem Sicherheitselement der oben beschriebenen Art ausgestattet ist. Das Sicherheitselement kann dabei insbesondere in den Datenträger eingebettet sein oder auf den Datenträger aufgebracht sein.

Die Erfindung enthält weiter ein Verfahren zum Herstellen eines Sicherheitselements mit einem Linsenrasterbild zur unskalierten Darstellung von zwei oder mehr vorbestimmten Sollbildern, bei dem
- zur Erzeugung eines Linsenrasterbilds ein Motivbild beabstandet von einem Linsenraster angeordnet wird, so dass das Motivbild bei Betrachtung mit dem Linsenraster die vorbestimmten Sollbilder zeigt, wobei
- das Linsenraster aus einer Mehrzahl von nicht-zylindrischen Mikrolinsen gebildet wird, die in einem Raster mit der Symmetrie eines Parallelogrammgitters angeordnet werden,
- das Motivbild aus einer Mehrzahl von Elementarzellen gebildet wird, welche im Parallelogramm-Raster des Linsenrasters zueinander versetzt angeordnet werden, wobei
- jede der Elementarzellen in zwei oder mehr Teilflächen zerlegt wird, jede dieser Teilflächen genau einem der Sollbilder zugeordnet wird und jeweils mit einem unskalierten Ausschnitt des Sollbilds versehen wird, dem die Teilfläche zugeordnet ist, und wobei
- die relative Lage der Mikrolinsen und der Teilflächen der Elementarzellen jeweils einen Betrachtungswinkelbereich festlegen, aus dem das Sollbild, dem die Teilfläche zugeordnet ist, bei der Betrachtung unskaliert gezeigt ist.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig.1: eine schematische Darstellung einer Banknote mit einem erfindungsgemäßen Sicherheitselement, das ein Wechselbild mit zwei unterschiedlichen Sollbildern darstellt,
- Fig. 2: schematisch den Aufbau eines erfindungsgemäßen Sicherheitselements, beispielsweise des Transferelements der Fig.1 im Querschnitt,
- Fig. 3: einen Ausschnitt des Linsenrasters des Sicherheitselements der Fig. 2 in Aufsicht,
- Fig. 4: schematisch eine Elementarzelle des Motivbilds des Sicherheitselements der Fig. 2,
- Fig. 5: schematisch eine Aufsicht auf das Sicherheitselement der Fig. 2 mit dem über dem Motivbild angeordneten Linsenraster,
- Fig. 6: in (a) eine rechteckige Elementarzelle eines Motivbilds und in (b) die im Parallelogrammraster des Linsenrasters wiederholt angeordnete Elementarzelle von (a),
- Fig. 7: in (a) eine krummlinig begrenzt Elementarzelle eines Motivbilds und in (b) die im Parallelogrammraster des Linsenrasters wiederholt angeordnete Elementarzelle von (a),
- Fig. 8: in (a) bis (h) verschiedene Varianten der Aufteilung einer Elementarzelle in Teilflächen, und

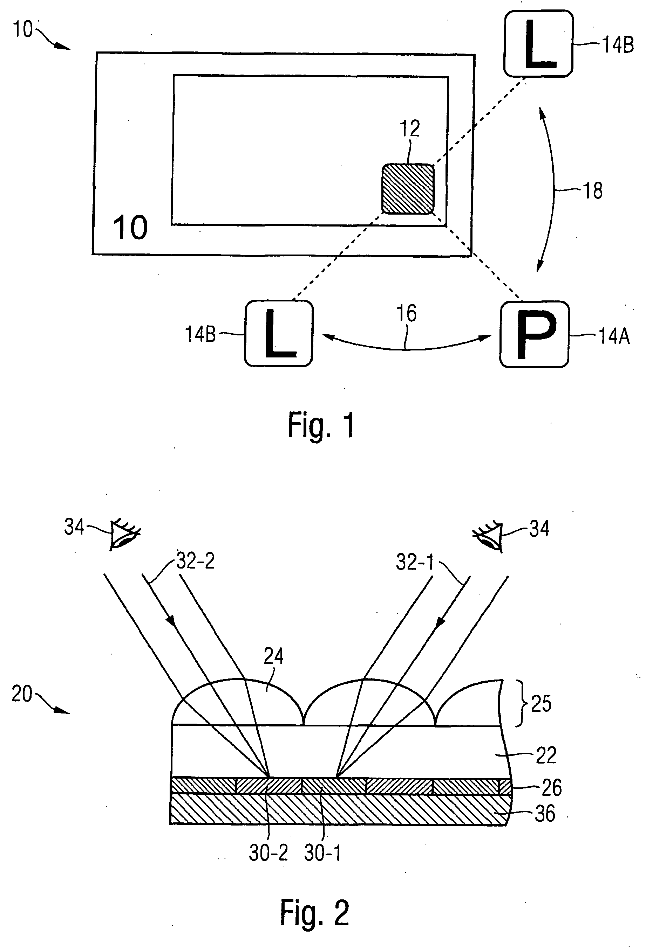

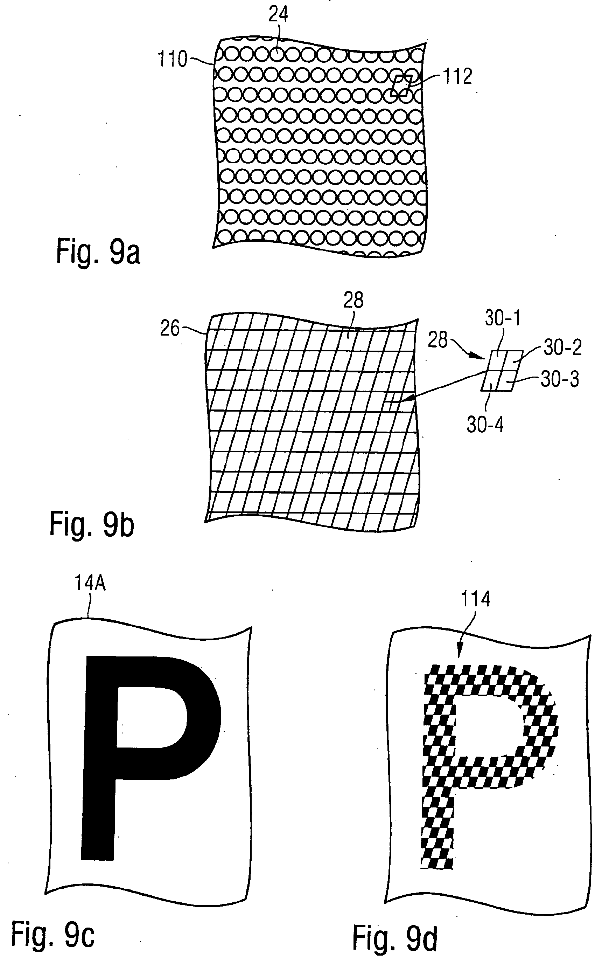

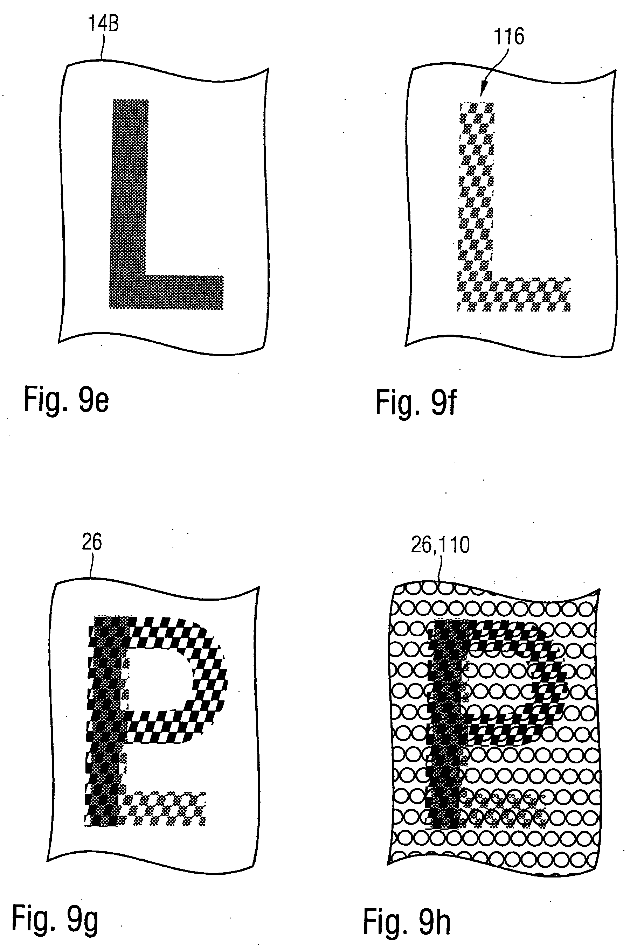

- Fig. 9: die Aufteilung der bei Fig.1 gezeigten Sollbilder in Ausschnitte und deren Anordnung in den Teilflächen der Elementarzellen des Motivbilds, wobei (a) ein Linsenraster, (b) das zugehörige Motivbild im Ausgangszustand, (c) das erste darzustellende Sollbild, (d) die in dem Motivbild anzuordnenden Ausschnitte des ersten Sollbilds, (e) das zweite darzustellende Sollbild, (f) die in dem Motivbild anzuordnenden Ausschnitte des zweiten Sollbilds, (g) das durch Kombination der Ausschnitte von (d) und (f) erhaltene Motivbild, und (h) die Überlagerung des Motivbilds von (f) mit dem Linsenraster von (a) im fertigen Sicherheitselement.

Die Erfindung wird nun am Beispiel von Sicherheitselementen für Banknoten und andere Wertdokumente erläutert. Figur 1 zeigt dazu eine schematische Darstellung einer Banknote 10, die mit einem erfindungsgemäßen Sicherheitselement in Form eines aufgeklebten Transferelements 12 versehen ist. Das Transferelement 12 stellt im Ausführungsbeispiel ein Wechselbild dar, das dem Betrachter je nach Betrachtungsrichtung eines von zwei unterschiedlichen Sollbildern 14A bzw. 14B präsentiert. Die Sollbilder sind im Ausführungsbeispiel zur Illustration durch die schwarzen Buchstaben "P" bzw. "L" vor weißem Hintergrund gebildet, stellen aber in der Praxis zumeist komplexere Motive, beispielsweise die Denomination der Banknote, geometrische Muster, Portraits, architektonische, technische oder Naturmotive dar. Die Motive können dabei insbesondere auch in Form von gerasterten Halbtondarstellungen vorliegen.

Eine Besonderheit des erfindungsgemäß Transferelements 12 besteht darin, dass der Bildwechsel zwischen den Sollbildern 14A,14B nicht nur beim Kippen in einer Richtung auftritt, wie bei herkömmlichen Kippbildern, sondern dass sowohl beim Kippen des Transferelements im Wesentlichen in West-Ost-Richtung 16, als auch beim Kippen im Wesentlichen in Nord-Süd-Richtung 18 ein solcher Bildwechsel auftritt. Auch bei weiteren, schrägen Kipprichtungen tritt ein Bildwechsel zwischen den Sollbildern 14A, 14B auf.

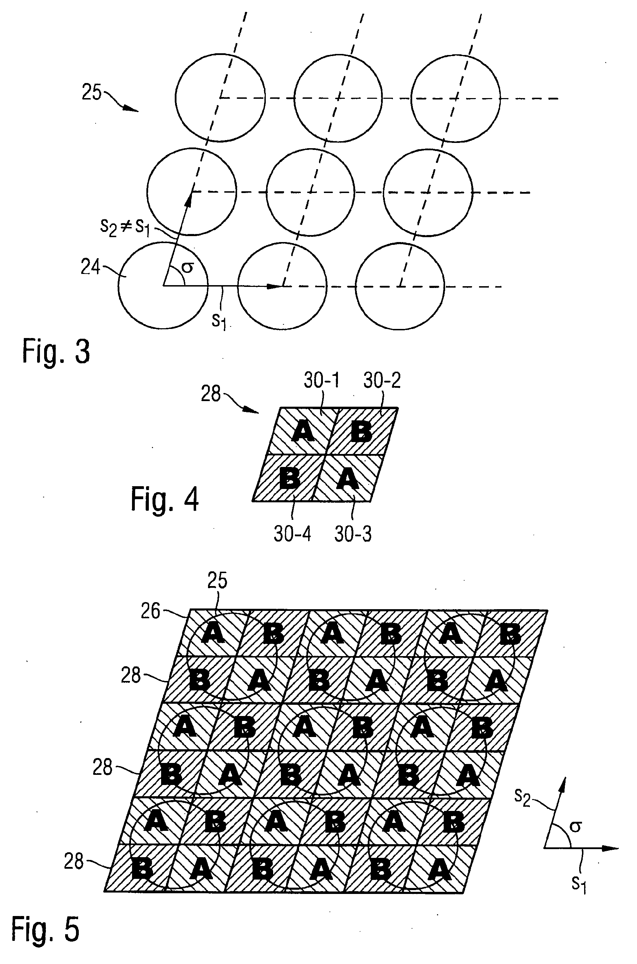

Der Aufbau und die prinzipielle Funktionsweise eines erfindungsgemäßen Sicherheitselements 20, beispielsweise des Transferelements 12 der Fig. 1, wird nun mit Bezug auf die Figuren 2 bis 5 näher beschrieben. Figur 2 zeigt dabei schematisch das Sicherheitselement 20 im Querschnitt, wobei, wie auch in den weiteren Figuren, nur die für die Erläuterung des Funktionsprinzips erforderlichen Teile des Aufbaus dargestellt sind. Weiter zeigt Fig. 3 einen Ausschnitt des Linsenrasters des Sicherheitselements 20 in Aufsicht, Fig. 4 zeigt schematisch eine Elementarzelle des Motivbilds und Fig. 5 zeigt schematisch eine Aufsicht auf das Sicherheitselement 20 mit dem über dem Motivbild angeordneten Linsenraster.

Das Sicherheitselement 20 der Fig. 2 weist einen Träger 22 in Form einer transparenten Kunststofffolie, beispielsweise einer etwa 20 µm dicken Polyethylenterephthalat(PET)-Folie auf. Der Träger 22 weist gegenüberliegende erste und zweite Hauptflächen auf, wobei die erste Hauptfläche mit einem Linsenraster 25 aus einer Mehrzahl nicht-zylindrischer Mikrolinsen 24 versehen ist. Wie am besten in Fig. 3 zu erkennen, sind die Mikrolinsen 24 regelmäßig in Form eines Mikrolinsenrasters 25 angeordnet, das die Symmetrie eines Parallelogrammgitters aufweist.

Alle periodischen ebenen Anordnungen lassen sich einem von fünf grundlegenden Bravais-Gittern, nämlich Quadrat-Gitter, Rechteck-Gitter, Rauten-Gitter, Sechseck-Gitter und Parallelogramm-Gitter zuordnen, wobei zur eindeutigen Zuordnung das Bravais-Gitter der höchsten Symmetrie gewählt wird. Hat ein Gitter somit die Symmetrie eines Parallelogramm-Gitters, so bedeutet dies, dass das Gitter keine höhere Symmetrie als die des allgemeinen Parallelogramm-Gitters aufweist und eine schiefwinklige Gitterzelle mit ungleichlangen Seiten s₁ und s₂ und beliebigem Zwischenwinkel σ besitzt, wie in Fig. 3 illustriert.

In der vorliegenden Beschreibung werden die Begriffe Gitter und Raster oft synonym gebraucht, auch wenn eigentlich der Begriff Gitter die mathematisch abstrahierte Menge von Gitterpunkten mit einer bestimmten Symmetrie bezeichnet und der Begriff Raster die konkrete Anordnung physischer Objekte an Orten, die den Gitterpunkten des zugrundeliegenden mathematischen Gitters entsprechen. In diesem Sinn ist die Anordnung der Mikrolinsen und der Elementarzellen jeweils ein Raster, da konkrete physische Objekte angeordnet sind. Die Symmetrie der Raster ist die eines Parallelogramm-Gitters, da die Mikrolinsen bzw. Elementarzellen an Orten angeordnet sind, die den Gitterpunkten eines mathematischen ParallelogrammGitters entsprechen. Abkürzend wird ein solches Raster mit der Symmetrie eines Parallelogramm-Gitters auch als Parallelogramm-Raster bezeichnet.

Die für die Mikrolinsen 24 gewählte Parallelogramm-Rasteranordnung ist daher diejenige regelmäßige Anordnung in der Ebene mit der geringstmöglichen Symmetrie. Insbesondere treten bei einer solchen Anordnung keine Symmetrieachsen in der Ebene der Mikrolinsen 24 auf.

Die Seitenlängen s₁ und s₂ des Parallelogramm-Gitters liegen vorteilhaft zwischen 3 µm und 100 µm, im Ausführungsbeispiel etwa bei s₁ = 32 µm und s₂ = 26 µm. Der Zwischenwinkel σ kann beispielsweise σ = 75° betragen.

Im gezeigten Ausführungsbeispiel sind die Mikrolinsen 24 sphärisch ausgestaltet und weisen einen Durchmesser zwischen 15 µm und 30 µm auf, so dass sie mit bloßem Auge nicht zu erkennen sind. Die Dicke des Trägers 22 und die Krümmung der Mikrolinsen 24 sind so aufeinander abgestimmt, dass die Brennweite der Mikrolinsen 24 im Wesentlichen der Dicke des Trägers 22 entspricht. Das auf der zweiten Hauptfläche des Trägers 22 angeordnete Motivbild 26 liegt dann in der Fokusebene der Mikrolinsen 24.

Das Motivbild 26 ist aus einer Mehrzahl von identischen Elementarzellen 28 zusammengesetzt, von denen eine in Fig. 4 schematisch separat dargestellt ist. Die Elementarzellen 28 sind im Parallelogrammraster des Linsenrasters 25 zueinander versetzt angeordnet, wie in Fig. 5 gezeigt, weisen also dieselbe Gittersymmetrie wie das Mikrolinsenraster 25 der Fig. 3 auf.

Jeder der Elementarzellen 28 ist in gleicher Weise rasterförmig in vier gleich große Teilflächen 30-1,30-2,30-3 und 30-4 zerlegt. Die einander diagonal gegenüberliegenden Teilflächen 30-1 und 30-3 sind dabei dem ersten Sollbild 14A zugeordnet, das den Buchstaben "P" darstellt. Diese Teilflächen sind zur Unterscheidung in den Figuren 4 und 5 mit einer ersten Schraffur und dem Symbol "A" gekennzeichnet. Die einander ebenfalls diagonal gegenüberliegenden Teilflächen 30-2 und 30-4 sind dem zweiten Sollbild 14B zugeordnet, das den Buchstaben "L" darstellt. Diese Teilflächen sind zur Unterscheidung mit einer zweiten Schraffur und dem Symbol "B" gekennzeichnet.

Im fertigen Sicherheitselement enthalten die Teilflächen 30-1 und 30-3 bzw. 30-2 und 30-4 jeweils unskalierte Ausschnitte desjenigen Sollbilds 14A bzw. 14B, dem sie zugeordnet sind. Wie weiter unten mit Bezug auf Fig. 9 genauer beschrieben bedeutet dies, dass die in den Teilflächen vorliegenden Ausschnitte der Sollbilder weder vergrößert noch verkleinert sind, sondern im Maßstab 1:1 vorliegen. Die Mikrolinsen 24 erzeugen bei der Betrachtung des Motivbilds auch keine vergrößerte oder verkleinerte Darstellung der Sollbilder, sondern führen durch ihre fokussierende Wirkung nur dazu, dass die Teilflächen jeweils nur aus bestimmten Betrachtungswinkelbereichen sichtbar sind.

Genauer gesagt wird durch die relative Lage der Mikrolinsen 24 und der Teilflächen 30-1 bis 30-4 im Sicherheitselement 20 für jede Teilfläche 30-n (mit n= 1 bis 4) ein Betrachtungswinkelbereich definiert, aus dem die Teilfläche 30-n und damit das Sollbild, dem die Teilfläche zugeordnet ist, sichtbar ist. Bezugnehmend auf Fig. 2 ist beispielsweise durch die relative Lage der Teilfläche 30-1 diese Teilfläche und damit das Sollbild 14A mit dem Buchstaben "P" wegen der fokussierenden Wirkung der Mikrolinsen 24 aus der Betrachtungsrichtung 32-1 und aus einem bestimmten Winkelbereich um diese Betrachtungsrichtung herum für den Betrachter 34 sichtbar. Aus der Betrachtungsrichtung 32-2 sind für den Betrachter 34 dagegen die Teilflächen 30-2 und damit das Sollbild 14B mit dem Buchstaben "L" sichtbar. Auch hier versteht sich, dass die Teilflächen 30-2 nicht nur aus einer einzigen mathematischen Richtung sichtbar sind, sondern dass sie aus einem endlichen Winkelbereich um die Betrachtungsrichtung 32-2 herum sichtbar sind, dessen Größe durch die Ausdehnung der Teilflächen 30-2 gegeben ist.

Da die Mikrolinsen 24 und die Elementarzellen 28 im gleichen Raster angeordnet sind und jede Elementarzelle 28 in gleicher Weise in Teilflächen 30-n zerlegt ist, ist die Sichtbarkeitsbedingung für alle Teilflächen des Motivbilds 26 gleich. Aus der Betrachtungsrichtung 32-1 sind somit alle Teilflächen 30-1 der Mehrzahl an Elementarzellen 28 sichtbar, so dass sich die in diesen Teilflächen angeordneten Ausschnitte für den Betrachter 34 zu dem Sollbild 14A zusammensetzen.

Analog sind aus der Betrachtungsrichtung 32-2 alle Teilflächen 30-2 der Mehrzahl an Elementarzellen 28 sichtbar, so dass sich die in diesen Teilflächen angeordneten Ausschnitte für den Betrachter 34 zu dem Sollbild 14B zusammensetzen. Beim Kippen des Sicherheitselements 20 in West-Ost-Richtung 16, also beim Wechsel zwischen den Betrachtungsrichtungen 32-1 und 32-2, wechselt der Bildeindruck daher zwischen den Sollbildern 14A und 14B hin und her.

Wie aus der Geometrie des vollständigen Motivbilds der Fig. 5 ersichtlich, ergibt sich in gleicher Weise ein Bildwechsel zwischen den Sollbildern 14A und 14B, wenn das Sicherheitselement 20 entlang der Gitterseite s₂, also im Wesentlichen in Nord-Süd-Richtung 18 gekippt wird, da die Sichtbarkeit dann zwischen den Teilflächen 30-1 und den Teilflächen 30-4, bzw. zwischen den Teilflächen 30-2 und den Teilflächen 30-3 wechselt.

Ein besonderer Vorteil der Parallelogramm-Symmetrie des Linsenrasters und des Elementarzellenrasters besteht darin, dass wegen der verschiedenen möglichen Parallelogramm-Geometrien, die jeweils durch die Parameter Seitenlänge s₁, Seitenlänge s₂ und Zwischenwinkel σ definiert sind, ein verstecktes Sicherheitsmerkmal in das Sicherheitselement 20 eingebracht werden kann. Die Seitenlängen des Parallelogramm-Rasters liegen unterhalb der Auflösungsgrenze des menschlichen Auges, so dass das verstecke Sicherheitsmerkmal nur mit Hilfsmitteln, wie etwa einem Mikroskop erkannt werden kann. Die Bildwirkung des Sicherheitselements ist unabhängig von der gewählten Rasterung und gibt daher keinen Hinweis auf das Vorliegen eines versteckten Merkmals.

Ein weiterer Vorteil der Parallelogramm-Symmetrie besteht darin, dass Linsenrasterbilder mit Parallelogramm-Symmetrie schwieriger herzustellen und damit auch schwieriger nachzuahmen sind als Linsenrasterbilder mit höherer Symmetrie. Bei der Originalherstellung können beispielsweise hexagonale Symmetrien als eine Lage einer dichtesten Kugelpackung selbstorganisiert erzeugt werden, was bei parallelogrammförmigen Anordnungen nicht möglich ist. Auch müssen insbesondere wegen der oben angesprochenen fehlenden Spiegelsymmetrie die Prägewerkzeuge aller Herstellungsschritte exakt geplant und aufeinander abgestimmt werden, um sicherzustellen, dass die auf den gegenüberliegenden Hauptflächen des Trägers 22 angeordneten Strukturen ein übereinstimmendes und zusammenwirkendes Raster aufweisen. Verwendet ein Nachahmer zur Umgehung dieser Schwierigkeiten ein Raster höherer Symmetrie, ist dies am fertigen Produkt erkenn- und nachweisbar. Die Sicherheitselemente mit Parallelogramm-Symmetrie weisen daher auch aus diesem Grund eine erhöhte Fälschungssicherheit auf.

Zurückkommend auf die Darstellung der Fig. 2 enthält das Sicherheitselement 20 typischerweise weitere Schichten 36, wie etwa Schutz-, Abdeck- oder weitere Funktionsschichten, die für die vorliegenden Erfindung jedoch nicht wesentlich sind und daher nicht näher beschrieben werden.

Im Rahmen der Erfindung sind die Elementarzellen des Motivbilds zwar im Parallelogramm-Raster des Linsenrasters angeordnet, dies bedeutet jedoch nicht, dass die Elementarzellen selbst parallelogrammförmig sein müssen.

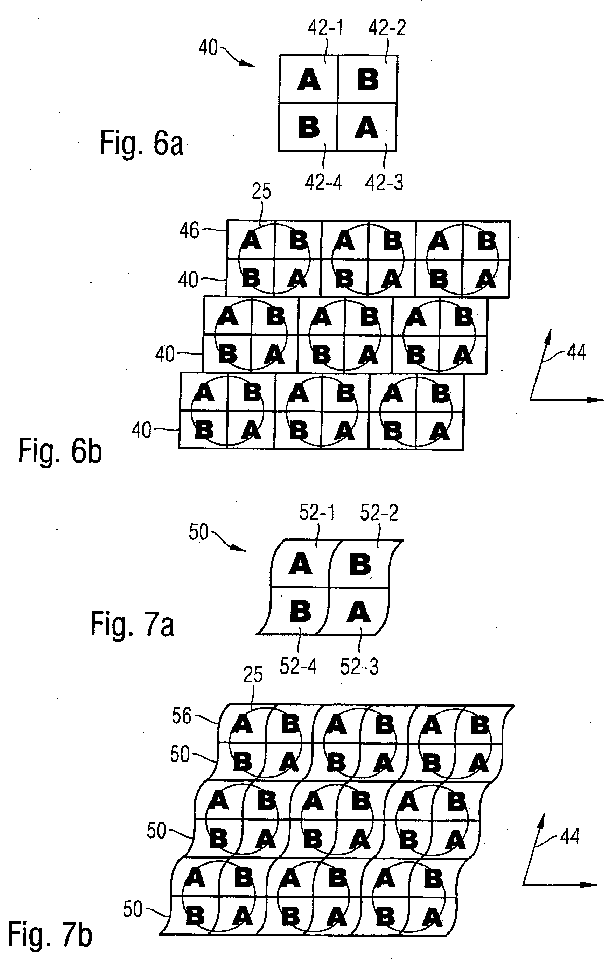

So zeigt Fig. 6(a) eine Elementarzelle 40, die dieselbe Gesamtfläche wie die Elementarzelle 28 einnimmt, die aber in Form eines Rechtecks ausgebildet und rasterförmig in vier gleich große, rechteckige Teilflächen 42-1,42-2,42-3 und 42-4 zerlegt ist. Die Teilflächen 42-1 und 42-3 sind dem ersten Sollbild 14A, die Teilflächen 42-2 und 42-4 dem zweiten Sollbild 14B zugeordnet, wie durch die Symbole "A" bzw. "B" in den Teilflächen angedeutet.

Wie in Fig. 6(b) gezeigt, kann auch die Elementarzelle 40 im Parallelogrammraster 44 des Linsenrasters 25 der Fig. 3 versetzt wiederholt angeordnet werden, um ein erfindungsgemäßes Motivbild 46 zu schaffen. Beim Kippen eines Sicherheitselements mit dem Motivbild 46 und einem Mikrolinsenraster 25 ergibt sich dann sowohl beim Kippen in West-Ost-Richtung als auch beim Kippen in Nord-Süd-Richtung der gewünschte Bildwechsel zwischen den Sollbildern 14A und 14B.

Die Begrenzungslinien der Elementarzellen und der Teilflächen müssen nicht geradlinig sein. Mit Bezug auf Fig. 7(a) ist eine Elementarzelle 50 gezeigt, die dieselbe Gesamtfläche wie die Elementarzellen 28 und 40 einnimmt, die aber geschwungene Begrenzungslinien aufweist und rasterförmig in vier gleich große, krummlinig begrenzte Teilflächen 52-1, 52-2, 52-3 und 52-4 zerlegt ist. Wiederum sind die Teilflächen 52-1 und 52-3 dem ersten Sollbild 14A und die Teilflächen 52-2 und 52-4 dem zweiten Sollbild 14B zugeordnet.

Wie in Fig. 7(b) gezeigt, kann auch die Elementarzelle 50 im Parallelogrammraster 44 des Linsenrasters 25 der Fig. 3 versetzt wiederholt angeordnet werden, um ein erfindungsgemäßes Motivbild 56 zu schaffen. Beim Kippen eines Sicherheitselements mit dem Motivbild 56 und einem Mikrolinsenraster 25 ergibt sich dann sowohl beim Kippen in West-Ost-Richtung als auch beim Kippen in Nord-Süd-Richtung der gewünschte Bildwechsel zwischen den Sollbildern 14A und 14B.

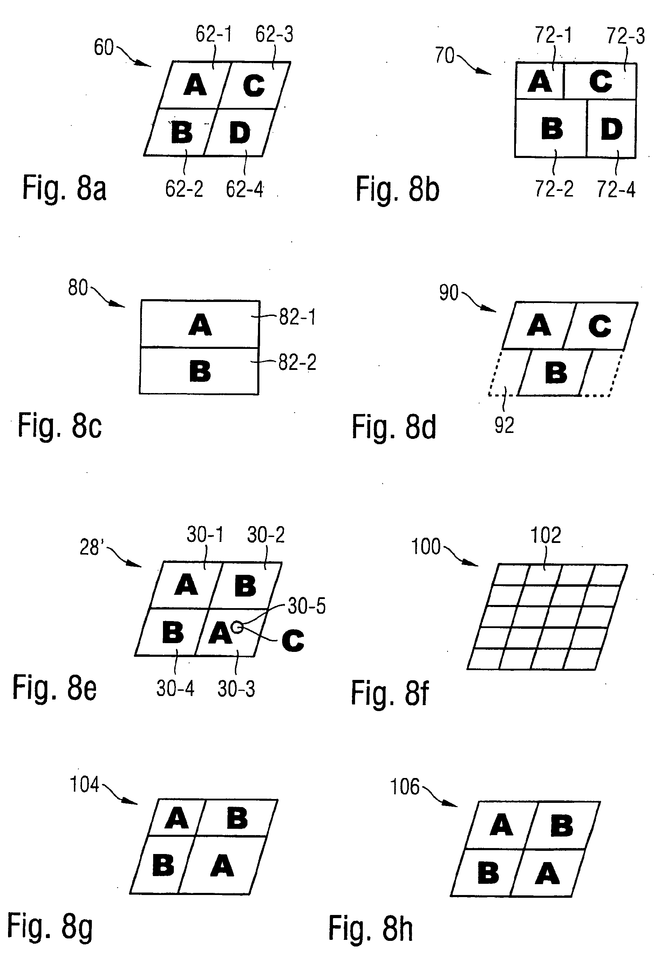

Figur 8 zeigt weitere mögliche Varianten der Aufteilung einer Elementarzelle in Teilflächen. Bei Fig. 8(a) ist die Elementarzelle 60 wie die Elementarzelle 28 der Fig. 4 in vier gleich große Teilflächen 62-1 bis 62-4 zerlegt. Allerdings ist hier die Teilfläche 62-1 einem ersten Sollbild (Symbol "A"), die Teilfläche 62-2 einem zweiten Sollbild (Symbol "B"), die Teilfläche 62-3 einem dritten Sollbild (Symbol "C") und die Teilfläche 62-4 einem vierten Sollbild (Symbol "D") zugeordnet. Wird analog zu dem Vorgehen bei Fig. 5 durch periodische Wiederholung der Elementarzelle 60 ein Motivbild gebildet, so erzeugt dieses nach Kombination mit dem Linsenraster 25 der Fig. 3 einen Bildwechsel zwischen vier Sollbildern "A" bis "D".

Die Teilflächen einer Elementarzelle müssen nicht gleich groß sein, wie in Fig. 8(b) anhand einer Elementarzelle 70 für vier Teilflächen 72-1 bis 72-4 illustriert. Größere bzw. kleinere Teilflächen führen dabei zu einem größeren bzw. kleineren Sichtbarkeitsbereich für dasjenige Sollbild, dem die Teilfläche zugeordnet ist. Im gezeigten Ausführungsbeispiel hat die Teilfläche 72-2 den größten Flächenanteil und damit das zugehörige Sollbild den größten Sichtbarkeitsbereich.

Es ist auch möglich, einen Bildwechsel im Wesentlichen nur in einer Kipprichtung zuzulassen, wie in Fig. 8(c) gezeigt. Die Elementarzelle 80 wird dazu beispielsweise in zwei übereinander angeordnete Teilflächen 82-1 und 82-2 zerlegt, so dass ein Bildwechsel im Wesentlichen nur beim Kippen in Nord-Süd-Richtung auftritt, während ein Kippen in West-Ost-Richtung keinen Bildwechsel erzeugt. Es versteht sich, dass die Elementarzelle 80 auch mehr als zwei Teilflächen, beispielsweise in vier übereinander angeordnete Teilflächen zerlegt werden kann. Dadurch kann ein Bildwechsel zwischen mehr als zwei Bildern erzeugt werden, beispielsweise durch eine Abfolge von Teilflächen A-B-C-D, die vier verschiedenen Sollbildern A, B, C, D zugeordnet sind. Es kann auch ein Bildwechsel mit höherer Umschaltfrequenz erzeugt werden, beispielsweise durch eine mehrfache Abfolge von zwei verschiedenen Sollbildern A und B zugeordneten Teilflächen, etwa in der Folge A-B-A-B.

Mit Bezug auf Fig. 8(d) muss eine Elementarzelle 90 nicht vollständig in Teilflächen zerlegt werden, die einem der darzustellenden Sollbild zugeordnet sind. Teilbereiche 92 einer Elementarzelle 90, die keinem Sollbild zugordnet sind, führen dazu, dass aus den entsprechenden Betrachtungsrichtungen kein Bild sichtbar ist.

Die Variante der Elementarzelle 28' der Fig. 8(e) basiert auf dem Ausführungsbeispiel der Figuren 4 und 5. Gegenüber der dort gezeigten Gestaltung ist bei dem Ausführungsbeispiel der Fig. 8(e) ein zusätzliches Sollbild vorgesehen, dem die Teilfläche 30-5 mit dem Symbol "C" zugeordnet ist. Aufgrund der kleinen räumlichen Ausdehnung der Teilfläche 30-5 ist das Sollbild "C" nur in einem sehr engen Blickwinkelbereich sichtbar, welcher innerhalb des für das Sollbilds 14A vorgesehenen größeren Blickwinkelbereichs der Teilfläche 30-3 liegt. Mit Vorteil unterscheidet sich das Sollbild "C" von dem Sollbild 14A nur in der Vordergrundgestaltung, während die Hintergrundgestaltung des Sollbilds "C" dem des Sollbilds 14A entspricht. Trifft der Betrachter beim Kippen auf den engen Blickwinkelbereich des Sollbilds "C", so scheint sich vor einen unveränderten Hintergrund ein veränderter Vordergrund zu schieben. Das Sollbild "C" kann insbesondere eine zusätzliche Kodierung darstellen, die für den Betrachter oder eine maschinelle Prüfeinrichtung in einem schmalen Blickwinkelbereich innerhalb des Sollbilds 14A aufscheint.

Figur 8(f) zeigt eine Elementarzelle 100, die in viele, hier beispielsweise 20 Teilflächen 102 zerlegt ist, so dass entsprechend viele Sollbilder dargestellt werden können. Solche Zerlegungen bieten sich insbesondere an, um Bewegungsbilder, Morphbilder, Stereobilder, Pumpbilder oder Kombinationen davon darzustellen.

In den bisher beschriebenen Ausgestaltungen sind die Elementarzellen jeweils alle in gleicher Weise in Teilflächen zerlegt, so dass die einander entsprechenden Teilflächen der Mehrzahl von Elementarzellen alle dieselbe Form und Größe aufweisen. Wie in Figuren 8(g) und (h) gezeigt, ist es allerdings auch möglich, dass die Elementarzellen nur bereichsweise in gleicher Weise in Teilflächen zerlegt sind, und dass sich die Zerlegungen der Teilbereiche voneinander unterscheiden. Beispielsweise können die Elementarzellen 104 in einer Abwandlung des Ausführungsbeispiels der Figuren 4 und 5 im Bereich der Buchstaben "P" und "L" in der in Fig. 8(g) gezeigten Weise in Teilflächen zerlegt sein, während die Elementarzellen 106 im Hintergrundbereich in der in Fig. 8(h) gezeigten Weise in Teilflächen zerlegt sind. Da sich die Form und Größe der Teilflächen der Elementarzellen 104,106 unterscheiden, gibt es einige Betrachtungsrichtungen, aus denen unterschiedliche Teilflächen der Elementarzellen 104,106 sichtbar sind. Für diese Betrachtungsrichtungen ergeben sich visuelle Überlappungseffekte von Vordergrund- und Hintergrundbereich, die gezielt in das Design der Sollbilder integriert werden können.

Der Übergang zwischen den Elementarzellen 104 und 106 kann auch in einem gewissen Motivbildbereich kontinuierlich erfolgen, so dass sich benachbarte Elementarzellen in Form und Größe der einander entsprechenden Teilbereiche nur wenig unterscheiden. Beispielsweise kann die Änderung von den Elementarzellen 104 zu den Elementarzellen 106 der Figuren 8(g) und (h) über mehrere zehn oder sogar mehrere hundert Zwischenschritte erfolgen. Dadurch treten keine Sprünge in der Darstellung auf, dennoch können über größere Abstände auf dem Sicherheitselement unterschiedliche Sichtbarkeitsbereiche erhalten werden.

Bewegungsbilder stellen beispielsweise eine Bewegung eines Objekts entlang eines beliebigen Pfads, Pumpbilder ein Aufblähen oder Schrumpfen eines Objekts oder eine Drehung eines Objekts dar. Die Bewegung kann zur Aufmerksamkeitssteigerung auch kontraintuitiv gewählt sein, beispielsweise kann sich ein Objekt beim Kippen des Sicherheitselements in Nord-Süd-Richtung für den Betrachter in West-Ost-Richtung bewegen (orthoparallaktische Bewegung) oder ein Objekt kann sich beim Kippen des Sicherheitselements um seine Achse drehen. Bei einem Morphbild verwandelt sich ein erstes Motiv beim Kippen über eine oder mehrere Zwischenstufen in ein zweites Objekt.

Die Aufteilung der bei Fig.1 gezeigten Sollbilder 14A, 14B (Buchstaben "P" und "L") in Ausschnitte und die Anordnung der Ausschnitte in den Teilflächen der Elementarzellen des Motivbilds wird nunmehr mit Bezug auf Fig. 9 näher erläutert.

Zunächst zeigt Figur 9(a) ein Linsenraster 110 mit einer Mehrzahl sphärischer Mikrolinsen 24 mit einem Durchmesser von 20 µm, die in einem Mikrolinsenraster mit der Symmetrie eines Parallelogrammgitters angeordnet sind. Eine Einheits-Gitterzelle 112 des Parallelogrammgitters ist zur Illustration ebenfalls eingezeichnet, wobei die ungleichen Seitenlängen des Parallelogrammgitters im Ausführungsbeispiel s₁ = 21 µm und s₂ = 24 µm betragen und der Zwischenwinkel σ = 80° ist.

Figur 9(b) zeigt das zugehörige Motivbild 26 im Ausgangszustand mit noch unbelegten Teilflächen. Das Motivbild 26 ist aus einer Mehrzahl von Elementarzellen 28 gebildet ist, die im Parallelogramm-Raster des Linsenrasters 110 zueinander versetzt angeordnet sind. Die Elementarzellen 28 sind alle in der im Zusammenhang mit Fig. 4 genauer beschriebenen Weise rasterförmig in vier Teilflächen 30-1 bis 30-4 zerlegt. Um die Darstellung zu vereinfachen ist in Fig. 9(b) die Zerlegung nur für eine Elementarzelle eingezeichnet, die neben dem Motivbild 26 nochmals vergrößert dargestellt ist.

Figur 9(c) zeigt das erste darzustellende Sollbild 14A in Form eines schwarzen Buchstabens "P" vor weißem Hintergrund. Diesem Sollbild 14A sind die Teilflächen 30-1 und 30-3 der Elementarzellen 28 zugeordnet. Die beiden anderen Teilflächen 30-2 und 30-4 sind dem Sollbild 14B zugeordnet, das einen schwarzen Buchstaben "L" vor weißem Hintergrund zeigt, wie in Fig. 9(e) dargestellt. In den Figuren ist der Buchstabe "L" schraffiert, um ihn und seine Teilflächen von den Teilflächen des Buchstabens "P" des Sollbilds 14A unterscheiden zu können.

Da die Darstellung der Sollbilder unskaliert, also weder vergrößert noch verkleinert erfolgen soll, werden aus dem Bild des Buchstabens "P" der Fig. 9(c) gerade die dem Sollbild 14B zugeordneten Teilflächen 30-2 und 30-4 entfernt, so dass nur die Teile des Buchstabens "P", die in den Teilflächen 30-1 und 30-3 liegen, übrig bleiben. Das Ergebnis dieses Aufteilungsschritts mit den in dem Motivbild anzuordnenden Ausschnitten 114 des ersten Sollbilds 14A ist in Fig. 9(d) dargestellt. Es versteht sich, dass Figuren vor allem bezüglich der Größenverhältnisse hier stark schematisiert sind, da die Sollbilder 14A, 14B in der Regel mehrere Millimeter oder sogar einige Zentimeter groß sind, während die Teilbereiche 30-1 bis 30-4 typischerweise Abmessungen im Bereich von einigen Mikrometern oder einigen zehn Mikrometern aufweisen.

In gleicher Weise wird dann mit dem Sollbild 14B verfahren. Da dem Sollbild 14B die Teilflächen 30-2 und 30-4 der Elementarzellen 28 zugeordnet sind, werden entsprechend aus dem Bild des Buchstabens "L" die dem Sollbild 14A zugeordneten Teilflächen 30-1 und 30-3 entfernt, so dass nur die Teile des Buchstabens "L", die in den Teilflächen 30-2 und 30-4 liegen, übrig bleiben. Das Ergebnis dieses Aufteilungsschritts mit den in dem Motivbild anzuordnenden Ausschnitten 116 des zweiten Sollbilds 14B ist in Fig. 9(f) dargestellt.

Die Ausschnitte 114 und 116 der Teilflächen 30-1, 30-3 bzw. 30-2,30-4 mit den unskalierten Ausschnitten der Sollbilder 14A, 14B werden dann ineinander geschoben und miteinander kombiniert, so dass aus den Teilflächen 30-1 bis 30-4 wieder die vollständigen Elementarzellen 28 entstehen. Das auf diese Weise erzeugte Motivbild 26 ist in Fig. 9(g) gezeigt.

Figur 9(h) zeigt schließlich die Überlagerung des Motivbilds 26 mit dem Linsenraster 110 im fertigen Sicherheitselement, welches den gewünschten Bildwechsel zwischen den beiden Sollbildern 14A, 14B sowohl beim Kippen in West-Ost-Richtung als auch beim Kippen im Wesentlichen in Nord-Süd-Richtung aufweist.

### Bezugszeichenliste

- 10: Banknote
- 12: Transferelement
- 14A, 14B: Sollbilder
- 16, 18: Kipprichtungen
- 20: Sicherheitselement
- 22: Träger
- 24: Mikrolinsen
- 25: Linsenraster
- 26: Motivbild
- 28, 28': Elementarzellen
- 30-1, 30-2, 30-3, 30-4: Teilflächen
- 30-5: Teilfläche
- 32-1, 32-2: Betrachtungsrichtungen
- 34: Betrachter
- 36: weitere Schichten
- 40: Elementarzelle
- 42-1, 42-2, 42-3, 42-4: Teilflächen
- 44: Parallelogrammraster
- 46: Motivbild
- 50: Elementarzelle
- 52-1, 52-2, 52-3, 52-4: Teilflächen
- 56: Motivbild
- 60: Elementarzelle
- 62-1, 62-2, 62-3, 62-4: Teilflächen
- 70: Elementarzelle
- 72-1, 72-2, 72-3, 72-4: Teilflächen
- 80: Elementarzelle
- 82-1, 82-2: Teilflächen
- 90: Elementarzelle
- 92: Teilbereiche
- 100: Elementarzelle
- 102: Teilflächen
- 104, 106: Elementarzellen
- 110: Linsenraster
- 112: Gitterzelle
- 114, 116: Ausschnitte

## Patentansprüche

1. Sicherheitselement (20) zur Absicherung von Sicherheitspapieren, Wertdokumenten und anderen Datenträgern, mit einem Linsenrasterbild zur unskalierten Darstellung von zwei oder mehr vorbestimmten Sollbildern (14A,14B), wobei
- das Linsenrasterbild ein Linsenraster (25) und ein von dem Linsenraster (25) beabstandet angeordnetes Motivbild (26) enthält, das bei Betrachtung mit dem Linsenraster die vorbestimmten Sollbilder zeigt, wobei
- das Linsenraster (25) aus einer Mehrzahl von nicht-zylindrischen Mikrolinsen (24) gebildet ist, die in einem Raster mit der Symmetrie eines Parallelogrammgitters angeordnet sind, wobei das Parallelogramm-Raster eine schiefwinklige Einheits-Gitterzelle mit ungleichlangen Seiten (s₁, s₂) und einem Zwischenwinkel (σ) aufweist,
- das Motivbild (26) aus einer Mehrzahl von Elementarzellen (28) gebildet ist, welche im Parallelogramm-Raster des Linsenrasters (25) zueinander versetzt angeordnet sind, wobei
- jede der Elementarzellen (28) in zwei oder mehr Teilflächen (30-1, 30-2,30-3,30-4) zerlegt ist, jede dieser Teilflächen genau einem der Sollbilder (14A, 14B) zugeordnet ist und jeweils einen unskalierten Ausschnitt des Sollbilds enthält, dem die Teilfläche zugeordnet ist, und wobei
- die relative Lage der Mikrolinsen (24) und der Teilflächen (30-1, 30-2, 30-3, 30-4) der Elementarzellen (28) jeweils einen Betrachtungswinkelbereich (32-1,32-2) festlegen, aus dem das Sollbild, dem die Teilfläche zugeordnet ist, bei der Betrachtung unskaliert gezeigt ist.

2. Sicherheitselement nach Anspruch 1, **dadurch gekennzeichnet, dass** jede der Elementarzellen in drei oder mehr, nicht auf einer Geraden liegende Teilflächen zerlegt ist, vorzugsweise, dass jede der Elementarzellen in n x m rasterförmig angeordnete Teilflächen zerlegt ist, wobei n und m ganze Zahlen größer gleich 2 sind.

3. Sicherheitselement nach Anspruch 1 oder 2, **dadurch gekennzeichnet, dass** die Anzahl s der Sollbilder, deren Darstellung das Linsenrasterbild dient, kleiner ist als die Anzahl t der Teilflächen, in die jede der Elementarzellen zerlegt ist, vorzugsweise, dass t zusammengesetzt und s ein echter Teiler von t ist.

4. Sicherheitselement nach wenigstens einem der Ansprüche 1 bis 3, **dadurch gekennzeichnet, dass** das Linsenrasterbild der unskalierten Darstellung von zwei Sollbildern dient und dass jede der Elementarzellen rasterförmig in vier Teilflächen zerlegt ist, wobei jedem Sollbild zwei diagonal gegenüberliegende Teilflächen zugeordnet sind.

5. Sicherheitselement nach wenigstens einem der Ansprüche 1 bis 4, **dadurch gekennzeichnet, dass** die Elementarzellen alle in gleicher Weise in Teilflächen zerlegt sind.

6. Sicherheitselement nach wenigstens einem der Ansprüche 1 bis 4, **dadurch gekennzeichnet, dass** die Elementarzellen jeweils bereichsweise in gleicher Weise in Teilflächen zerlegt sind.

7. Sicherheitselement nach wenigstens einem der Ansprüche 1 bis 4, **dadurch gekennzeichnet, dass** sich die Zerlegung der Elementarzellen in Teilflächen zumindest in Teilbereichen des Motivbilds kontinuierlich ändert.

8. Sicherheitselement nach wenigstens einem der Ansprüche 1 bis 7, **dadurch gekennzeichnet, dass** die Elementarzellen parallelogrammförmig, rechteckig oder mit krummlinigen Begrenzungslinien ausgebildet sind.

9. Sicherheitselement nach wenigstens einem der Ansprüche 1 bis 8, **dadurch gekennzeichnet, dass** jede der Elementarzellen eine Fläche F aufweist, die zwischen 25 µm² und 10.000 µm² liegt.

10. Sicherheitselement nach wenigstens einem der Ansprüche 1 bis 9, **dadurch gekennzeichnet, dass** die Seitenlängen der Einheits-Gitterzelle des Parallelogramm-Rasters zwischen 3 µm und 100 µm, vorzugsweise zwischen 5 µm und 30 µm liegen.

11. Sicherheitselement nach wenigstens einem der Ansprüche 1 bis 10, **dadurch gekennzeichnet, dass** der Zwischenwinkel der Seiten der Einheits-Gitterzelle des Parallelogramm-Rasters zwischen 65° und 85° liegt.

12. Sicherheitselement nach wenigstens einem der Ansprüche 1 bis 11, **dadurch gekennzeichnet, dass** das Linsenrasterbild ein Wechselbild, ein Pumpbild, ein Bewegungsbild, ein Morphbild oder ein Stereobild ist.

13. Sicherheitselement nach wenigstens einem der Ansprüche 1 bis 12, **dadurch gekennzeichnet, dass** die Mikrolinsen sphärisch oder asphärisch ausgestaltet sind, und vorzugsweise einen Durchmesser zwischen 3 µm und 100 µm, vorzugsweise zwischen 5 µm und 50 µm aufweisen.

14. Sicherheitselement nach wenigstens einem der Ansprüche 1 bis 13, **dadurch gekennzeichnet, dass** die in den Teilflächen der Elementarzellen enthaltenen Ausschnitte durch geprägte Strukturen mit Erhebungen und/ oder Vertiefungen gebildet sind, die insbesondere auch farbgefüllt oder eingefärbt sein können, durch gedruckte Strukturen, durch transferierte Strukturen, durch metallische oder nicht-metallische Strukturen, durch optisch variable Farben, insbesondere auf Basis optisch variabler Pigmente, durch Interferenzschichten, durch Beugungsstrukturen, durch Subwellenlängenstrukturen, und/oder durch Mottenaugenstrukturen.

15. Sicherheitselement nach wenigstens einem der Ansprüche 1 bis 14, **dadurch gekennzeichnet, dass** das Sicherheitselement ein Sicherheitsfaden, ein Aufreißfaden, ein Sicherheitsband, ein Sicherheitsstreifen, ein Patch oder ein Etikett zum Aufbringen auf ein Sicherheitspapier, Wertdokument oder dergleichen ist.

16. Datenträger mit einem Sicherheitselement nach einem der Ansprüche 1 bis 15.

17. Verfahren zum Herstellen eines Sicherheitselements (20) mit einem Linsenrasterbild zur unskalierten Darstellung von zwei oder mehr vorbestimmten Sollbildern (14A,14B) , bei dem
- zur Erzeugung eines Linsenrasterbilds ein Motivbild (26) beabstandet von einem Linsenraster (25) angeordnet wird, so dass das Motivbild (26) bei Betrachtung mit dem Linsenraster (25) die vorbestimmten Sollbilder (14A, 14B) zeigt, wobei
- das Linsenraster (25) aus einer Mehrzahl von nicht-zylindrischen Mikrolinsen (24) gebildet wird, die in einem Raster mit der Symmetrie eines Parallelogrammgitters angeordnet werden, wobei das Parallelogramm-Raster eine schiefwinklige Einheits-Gitterzelle mit ungleichlangen Seiten (s₁, s₂) und einem Zwischenwinkel (σ) aufweist,
- das Motivbild (26) aus einer Mehrzahl von Elementarzellen (28) gebildet wird, welche im Parallelogramm-Raster des Linsenrasters (25) zueinander versetzt angeordnet werden, wobei
- jede der Elementarzellen (28) in zwei oder mehr Teilflächen (30-1, 30-2,30-3,30-4) zerlegt wird, jede dieser Teilflächen genau einem der Sollbilder (14A, 14B) zugeordnet wird und jeweils mit einem unskalierten Ausschnitt des Sollbilds versehen wird, dem die Teilfläche zugeordnet ist, und wobei
- die relative Lage der Mikrolinsen (24) und der Teilflächen (30-1,30-2, 30-3,30-4) der Elementarzellen (28) jeweils einen Betrachtungswinkelbereich (32-1, 32-2) festlegen, aus dem das Sollbild, dem die Teilfläche zugeordnet ist, bei der Betrachtung unskaliert gezeigt ist.

## Claims

1. A security element (20) for securing security papers, value documents and other data carriers, having a lens grid image for the unscaled display of two or more predetermined target images (14A, 14B),
- the lens grid image including a lens grid (25) and, arranged spaced apart from the lens grid (25), a motif image (26) that displays the predetermined target images when viewed with the lens grid,
- the lens grid (25) being formed from a plurality of non-cylindrical microlenses (24) that are arranged in a grid having the symmetry of a parallelogram lattice, the parallelogram grid comprising an oblique-angled unit lattice cell having sides (s₁, s₂) of unequal length and an intermediate angle (σ),
- the motif image (26) being formed from a plurality of unit cells (28) that are arranged offset from one another in the parallelogram grid of the lens grid (25),
- each of the unit cells (28) being partitioned into two or more sub-areas (30-1, 30-2, 30-3, 30-4), each of said sub-areas being allocated to exactly one of the target images (14A,14B) and each including one unscaled section of the target image to which the sub-area is allocated, and
- the relative position of the microlenses (24) and of the sub-areas (30-1, 30-2,30-3,30-4) of the unit cells (28) each defining a viewing angle range (32-1, 32-2) from which the target image to which the sub-area is allocated is displayed unsealed when viewed.

2. The security element according to claim 1, **characterized in that** each of the unit cells is partitioned into three or more sub-areas not lying on a straight line, preferably **in that** each of the unit cells is partitioned into n x m sub-areas arranged in a grid, with n and m being integers greater than or equal to 2.

3. The security element according to claim 1 or 2, **characterized in that** the number s of target images the lens grid image serves to display is less than the number t of sub-areas into which each of the unit cells is partitioned, preferably **in that** t is composite and s is a non-trivial divisor of t.

4. The security element according to at least one of claims 1 to 3, **characterized in that** the lens grid image serves to display two target images unscaled, and **in that** each of the unit cells partitioned into four sub-areas in a grid, two diagonally opposite sub-areas being allocated to each target image.

5. The security element according to at least one of claims 1 to 4, **characterized in that** the unit cells are all partitioned into sub-areas in the same way.

6. The security element according to at least one of claims 1 to 4, **characterized in that** the unit cells are partitioned into sub-areas in each region in the same way.

7. The security element according to at least one of claims 1 to 4, **characterized in that** the partitioning of the unit cells into sub-areas changes continuously at least in sub-regions of the motif image.

8. The security element according to at least one of claims 1 to 7, **characterized in that** the unit cells are developed to be parallelogram-shaped, rectangular or having curvilinear boundary lines.

9. The security element according to at least one of claims 1 to 8, **characterized in that** each of the unit cells has an area F that is between 25 µm² and 10,000 µm².

10. The security element according to at least one of claims 1 to 9, **characterized in that** the side lengths of the unit lattice cell of the parallelogram grid are between 3 µm and 100 µm, preferably between 5 µm and 30 µm.

11. The security element according to at least one of claims 1 to 10, **characterized in that** the intermediate angle of the sides of the unit lattice cell of the parallelogram grid is between 65° and 85°.

12. The security element according to at least one of claims 1 to 11, **characterized in that** the lens grid image is an alternating image, a pump image, a motion image, a morph image or a stereo image.

13. The security element according to at least one of claims 1 to 12, **characterized in that** the microlenses are designed to be spherical or aspherical, and preferably have a diameter between 3 µm and 100 µm, preferably between 5 µm and 50 µm.

14. The security element according to at least one of claims 1 to 13, **characterized in that** the sections included in the sub-areas of the unit cells are formed by embossed patterns having elevations and/or depressions that can especially also be ink-filled or colored, by printed patterns, by transferred patterns, by metallic or non-metallic patterns, by optically variable inks, especially based on optically variable pigments, by interference layers, by diffraction patterns, by subwavelength patterns, and/or by moth-eye patterns.

15. The security element according to at least one of claims 1 to 14, **characterized in that** the security element is a security thread, a tear strip, a security band, a security strip, a patch or a label for application to a security paper, value document or the like.

16. A data carrier having a security element according to one of claims 1 to 15.

17. A method for manufacturing a security element (20) having a lens grid image for the unscaled display of two or more predetermined target images (14A, 14B), in which
- to produce a lens grid image, a motif image (26) is arranged spaced apart from a lens grid (25) such that the motif image (26) displays the predetermined target images (14A, 14B) when viewed with the lens grid (25),
- the lens grid (25) being formed from a plurality of non-cylindrical microlenses (24) that are arranged in a grid having the symmetry of a parallelogram lattice, the parallelogram grid comprising an oblique-angled unit lattice cell having sides (s₁, s₂) of unequal length and an intermediate angle (σ),
- the motif image (26) being formed from a plurality of unit cells (28) that are arranged offset from one another in the parallelogram grid of the lens grid (25),
- each of the unit cells (28) being partitioned into two or more sub-areas (30-1, 30-2, 30-3, 30-4), each of said sub-areas being allocated to exactly one of the target images (14A, 14B) and each being provided with one unscaled section of the target image to which the sub-area is allocated, and
- the relative position of the microlenses (24) and of the sub-areas (30-1, 30-2, 30-3, 30-4) of the unit cells (28) each defining a viewing angle range (32-1, 32-2) from which the target image to which the sub-area is allocated is displayed unscaled when viewed.

## Revendications

1. Elément de sécurité (20) pour sécuriser des papiers de sécurité, documents de valeur et d'autres supports de données, avec une image lenticulaire pour la représentation non à l'échelle de deux images théoriques prédéfinies (14A, 14B) ou plus,
- l'image lenticulaire contenant un réseau lenticulaire (25) et une image de motif (26) disposée à distance du réseau lenticulaire (25), qui montre les images théoriques prédéfinies en observation avec le réseau lenticulaire,
- le réseau lenticulaire (25) étant formé d'une pluralité de microlentilles (24) non cylindriques, qui sont disposées dans un réseau avec la symétrie d'un réseau en parallélogramme, le réseau en parallélogramme comportant une cellule de réseau unitaire oblique avec des côtés de longueur inégale (s₁, s₂) et un angle intermédiaire (σ),
- l'image de motif (26) étant formée d'une pluralité de cellules élémentaires (28), qui sont disposées décalées les unes par rapport aux autres dans un réseau en parallélogramme du réseau lenticulaire (25),
- chacune des cellules élémentaires (28) étant découpée en deux parties de surface (30-1,30-2,30-3,30-4) ou plus, chacune de ces parties de surface étant attribuée exactement à une des images théoriques (14A, 14B) et contenant respectivement une découpe non à l'échelle de l'image théorique, à laquelle la partie de surface est attribuée, et
- la position relative des microlentilles (24) et des parties de surface (30-1,30-2,30-3,30-4) des cellules élémentaires (28) déterminant respectivement une plage d'angles d'observation (32-1,32-2) à partir de laquelle l'image théorique à laquelle est attribuée la partie de surface, est montrée non à l'échelle lors de l'observation.

2. Elément de sécurité selon la revendication 1, **caractérisé en ce que** chacune des cellules élémentaire est découpée en trois parties de surface ou plus ne se trouvant sur une droite, de préférence **en ce que** chacune des cellules élémentaires est découpée en n x m parties de surface disposées en forme de réseau, n et m étant des nombres entiers supérieurs à 2.

3. Elément de sécurité selon la revendication 1 ou 2, **caractérisé en ce que** le nombre s des images théoriques, dont la représentation sert à l'image de réseau lenticulaire, est plus petit que le nombre t des parties de surface dans lesquelles chacune des cellules élémentaires est découpée, de préférence, **en ce qu'**elle est composée de t et s est un vrai diviseur de t.

4. Elément de sécurité selon au moins une quelconque des revendications 1 à 3, **caractérisé en ce que** l'image de réseau lenticulaire de la représentation non à l'échelle sert de deux images théoriques et **en ce que** chacune des cellules élémentaires est découpée en quatre parties de surface en forme de réseau, deux parties de surface diagonalement opposées étant attribuées à chaque image théorique.

5. Elément de sécurité selon au moins l'une quelconque des revendications 1 à 4, **caractérisé en ce que** les cellules élémentaires sont toutes découpées par zone de la même manière.

6. Elément de sécurité selon au moins l'une quelconque des revendications 1 à 4, **caractérisé en ce que** les cellules élémentaires sont respectivement découpées en parties de surface par secteur de la même manière.

7. Elément de sécurité selon au moins l'une quelconque des revendications 1 à 4, **caractérisé en ce que** la division des cellules élémentaires en parties de surface varie de façon continue au moins en parties de zone de l'image de motif.

8. Elément de sécurité selon au moins l'une quelconque des revendications 1 à 7, **caractérisé en ce que** les cellules élémentaires sont constituées en forme de parallélogramme, perpendiculaires ou avec des lignes de délimitation curvilignes.

9. Elément de sécurité selon au moins l'une quelconque des revendications 1 à 8, **caractérisé en ce que** chacune des cellules élémentaires comporte une surface F, qui se situe entre 25 µm² et 10 000 µm².

10. Elément de sécurité selon au moins l'une quelconque des revendications 1 à 9, **caractérisé en ce que** les longueurs latérales de la cellule de réseau unitaire du réseau en parallélogramme se situent entre 3 µm et 100 µm, de préférence entre 5 µm et 30 µm.

11. Elément de sécurité selon au moins l'une quelconque des revendications 1 à 10, **caractérisé en ce que** l'angle intermédiaire des côtés de la cellule de réseau unitaire du réseau en parallélogramme se situe entre 65° et 85°.

12. Elément de sécurité selon au moins l'une quelconque des revendications 1 à 11, **caractérisé en ce que** l'image lenticulaire est une image alternative, une image de pompage, une image de mouvement, une image morphique ou une image stéréo.

13. Elément de sécurité selon au moins l'une quelconque des revendications 1 à 12, **caractérisé en ce que** les microlentilles sont configurées sphériques ou asphériques et comportent de préférence un diamètre se situant entre 3 µm et 100 µm, de préférence entre 5 µm et 50 µm.

14. Elément de sécurité selon au moins l'une quelconque des revendications 1 à 13, **caractérisé en ce que** les découpes contenues dans les parties de surface des cellules élémentaires sont formées par des structures empreintes avec des élévations et/ou des creux, qui peuvent être en particulier également remplis d'encre ou colorés, par des structures imprimées, par des structures transférées, par des structures métalliques ou non métalliques, par des encres à variation optique, en particulier à base de piments à variation optique, par des couches d'interférence, par des structures de diffraction, par des structures sub-longueur d'onde et/ou par des structures en forme d'oeil de mite.

15. Elément de sécurité selon au moins l'une quelconque des revendications 1 à 14, **caractérisé en ce que** l'élément de sécurité est un fil de sécurité, un fil de déchirage, une bandé de sécurité, un ruban de sécurité, un tampon ou une étiquette à appliquer sur un papier de sécurité, un document de valeur ou un élément analogue.

16. Support de données avec un élément de sécurité selon l'une quelconque des revendications 1 à 15.

17. Procédé destiné à réaliser un élément de sécurité (20) avec une image lenticulaire pour la représentation non à l'échelle de deux images théoriques prédéfinies (14A, 14B) ou plus, pour lequel
- une image de motif (26) est disposée à distance d'un réseau lenticulaire (25) pour produire une image lenticulaire de sorte que l'image de motif (26) montre les images théoriques prédéfinies (14A, 14B) en observation avec le réseau lenticulaire (25),
- le réseau lenticulaire (25) étant formé d'une pluralité de microlentilles non cylindriques (24), qui sont disposées dans un réseau avec la symétrie d'un réseau en parallélogramme, le réseau en parallélogramme comportant une cellule de réseau unitaire oblique avec des côtés de longueur inégale (s₁, s₂) et un angle intermédiaire (σ),
- l'image de motif (26) est formée d'une pluralité de cellules élémentaires (28), qui sont disposées décalées les unes par rapport aux autres dans le réseau en parallélogramme du réseau lenticulaire (25),
- chacune des cellules élémentaires (28) étant découpée en deux parties de surface (30-1,30-2,30-3,30-4) ou plus, chacune de ces parties de surface étant attribuée exactement à une des images théoriques (14A, 14B) et étant respectivement dotée d'une découpe non à l'échelle de l'image théorique, à laquelle la partie de surface est attribuée, et
- la position relative des microlentilles (24) et des parties de surface (30-1,30-2,30-3,30-4) des cellules élémentaires (28) déterminant respectivement une plage d'angles d'observation (32-1, 32-2) à partir de laquelle l'image théorique à laquelle est attribuée la partie de surface, est montrée non à l'échelle lors de l'observation.
